# EUROPÄISCHE PATENTSCHRIFT

(11) **EP 0 380 958 B1**
(45) Veröffentlichungstag und Bekanntmachung des Hinweises auf die Patenterteilung: **21.06.1995**
(21) Anmeldenummer: 90100853.2
(22) Anmeldetag: 16.01.1990
(51) Int. Cl.: H04Q 11/04, H04Q 3/545, H04Q 3/60

(54) **Schaltungsanordnung für Fernmeldevermittlungsanlagen, insbesondere Fernsprechvermittlungsanlagen, mit teilzentralen Schaltgliedern und zentralen Schalteinrichtungen**
Circuit arrangement for communication exchanges, especially telephone exchanges, with distributed switching groups and central switching arrangements
Circuit pour centraux de télécommunications, en particulier centraux téléphoniques, avec des groupes de commutateurs distribués et des dispositifs de commutation centraux

(30) Priorität: 03.02.1989 DE 3903290
(43) Veröffentlichungstag der Anmeldung: 08.08.1990
(73) Patentinhaber: SIEMENS AKTIENGESELLSCHAFT, 80333 München (DE)
(72) Erfinder: Birlmeier, Josef, D-8024 Deisenhofen (DE); Prey, Gerhard, D-8031 Eichenau (DE); Murr, Robert, D-8000 München 71 (DE)

(56) Entgegenhaltungen:
- EP-A- 0 197 312
- EP-A- 0 224 818
- EP-A- 0 291 789
- DE-A- 1 524 212
- DE-A- 3 224 459
- US-A- 4 178 479
- TELCOM REPORT - engl. Ausgabe Bd. 5, Nr. 4, 1982, München, Seiten 262 - 266; Frieser et al.:'Digital Concentrators in the EWSD Telephone Switching System'
- COMMUTATION & ELECTRONIQUENr. 10, Oktober 1965, PARIS (FR) Seiten 5 - 27; DUQUESNE ET AL:'Programmation et sécurité des autocommutateurs électroniques'
- PROCEEDINGS OF THE ISS - SESSION 34 A, PAPER 4 Mai 1984, FLORENCE (IT) Seiten 1 - 7; DABROWSKI ET AL: 'The hardware and software design for medium size digital switching systems'

## Beschreibung

Die Erfindung betrifft eine Schaltungsanordnung für Fernmeldeanlagen, insbesondere Fernsprechvermittlungsanlagen, in denen
- eine zentrale Schalteinrichtung, z.B. ein Prozessor, über eine Datenleitung mit einem teilzentralen Schaltglied, z.B. einem Konzentrator, verbunden ist, und
- das Schaltglied einen Speicher aufweist, der durch die Schalteinrichtung in regelmäßiger Folge auf ein Vorliegen von zwischengespeicherten Daten abgefragt wird, und
- in dem Schaltglied Mittel zum Überwachen des Zeitabstandes zwischen zwei aufeinanderfolgenden Abfragen auf eine Überschreitung eines festgelegten Zeitgrenzwertes vorgesehen sind.

Aus der EP-Al 0 197 312 ist eine gattungsgemäße Schaltungsanordnung bekannt, bei der innerhalb eines Konzentrators ein Konzentratorprozessor mit einem Modulprozessor über ein Leitungssystem verbunden ist. Der Konzentratorprozessor fragt in regelmäßigen Zeitabständen den Modulprozessor auf in ihm gespeicherte Daten ab. Der Modulprozessor überwacht den Zeitabstand zweier aufeinanderfolgender Abfragevorgänge.

Ferner sind solche Schaltungsanordnungen auch durch verschiedenenorts im praktischen Betrieb befindliche EWSD-Fernsprechvermittlungsanlagen bekannt. In einer aus der deutschen Offenlegungsschrift 3 224 459 bekannten Anordnung sind die teilzentralen Schaltglieder Konzentratoren und die zentralen Schalteinrichtungen zentrale Prozessoren einer übergeordneten Fernsprechvermittlungsstelle. In einem Konzentrator sind Konzentratorprozessoren vorgesehen. Unter anderem rufen innerhalb eines Konzentrators die Konzentratorprozessoren die genannten Daten von dezentralen Schaltungseinheiten, wie z.B. von Teilnehmeranschlußschaltungen von Teilnehmeranschlüssen, ferner Betriebszustandsdaten von Spannungsgeneratoren u.dgl., ab und halten sie zwischengespeichert zum Abfragen durch den zentralen Prozessor bereit.Die Konzentratorprozessoren rufen also die Daten ab und zwischenspeichern sie. Diese Daten können Vermittlungsbetriebs-Daten und Betriebszustands-Daten, sowie auch Daten noch anderer Art sein. Die Konzentratoren rufen also die Daten ab und zwischenspeichern sie. In diesem Zusammenhang werden diese Daten auch gesammelt, soweit sie nicht bereits jeweils von dem zentralen Prozessor inzwischen (also jeweils sehr schnell) abgefragt worden sind. Der zentrale Prozessor fragt also sukzessive nacheinander die in größerer Anzahl vorhandenen Konzentratoren auf vorliegende, gesammelte und zwischengespeicherte Daten ab, und zwar in zyklischer Folge.

Im hier gegebenen Zusammenhang hat die Betriebszustands-Überwachung bezüglich der Konzentratoren - einschließlich mit diesen verbundener dezentraler Schaltungseinheiten (Teilnehmeranschlußschaltungen und dergleichen) - eine besondere Bedeutung. Da eine Betriebszustands-Überwachung durch den zentralen Prozessor über die eingangs genannten Datenleitungen erfolgt, kann nun diese Betriebszustands-Überwachung im Ergebnis verfälscht oder gänzlich vereitelt werden durch Störungen an der betreffenden Datenleitung. Solche Datenleitungen können in bekannter Weise als Vierdrahtleitungen mit zwei Zweidrahtwegen - je einer für je eine der beiden Übertragungsrichtungen - ausgebildet sein, oder als entsprechende Kanalpaare, wobei ein Kanalpaar bekanntlich in entsprechender Weise je einen Kanal für jede der beiden Übertragungsrichtungen aufweist. Die vorstehend erwähnte Verfälschung oder Vereitelung kann durch eine Störung obiger Art verursacht sein. Diese kann bei einer Datenleitung beide Zweidrahtzweige bzw. Kanalpaare oder auch nur einen von ihnen betreffen.

Für die Erfindung besteht die Aufgabe, durch geeignete Maßnahmen die zentrale Schalteinrichtung in ihrer Überwachungsfunktion zu unterstützen. Dabei sollen von Störungen an den Datenleitungen, die in der angegebenen Weise in verschiedener Form auftreten können, diejenigen eliminiert werden, deren Eliminierung mit relativ geringem Aufwand erreichbar ist.

Die Erfindung löst die ihr gestellte Aufgabe dadurch, daß
- die Schalteinrichtung nach Maßgabe ihrer Bauart, insbesondere älterer und neuerer Bauart, zur Aufnahme von Daten in Rahmen jeweils unterschiedlicher Länge eingerichtet ist, und
- das Schaltglied für eine Zusammenarbeit mit zentralen Schalteinrichtungen zweierlei Bauart, insbesondere älterer und neuerer Bauart, eingerichtet ist, und
- das Schaltglied Mittel zum Erkennen der Bauart der Schalteinrichtung nach Maßgabe eines bauartspezifischen Abfragesignales enthält, und
- Mittel zum Übertragen der Daten von dem Schaltglied zu der Schalteinrichtung nach Maßgabe der erkannten Bauart in Rahmen entsprechender Länge vorgesehen sind,
- die in dem Speicher zwischengespeicherten Daten bei Feststellung einer Überschreitung des Zeitgrenzwertes kontinuierlich und zerstörungsfrei ausgelesen sowie kontinuierlich wiederholt zu der Schalteinrichtung übertragen werden, und
- in dem Schaltglied Mittel zum Speichern der aus dem Abfragesignal erkannten Bauart der Schalteinrichtung vorgesehen sind, und
- bei Feststellung einer Überschreitung des Zeitgrenzwertes in dem Schaltglied die Daten zu der Schalteinrichtung in Rahmen, deren Länge der gespeicherten Bauart der Schalteinrichtung entspricht, übertragen werden.

Ein teilzentrales Schaltglied unterstützt die zentrale Schalteinrichtung in ihrer Überwachungsfunktion im Hinblick auf diejenigen Störungsfälle, in denen bei einer entsprechenden Datenleitung die Übertragungsfähigkeit lediglich für die Übertragungsrichtung von der zentralen Schalteinrichtung zu dem teilzentralen Schaltglied (also in der umgekehrten Übertragungsrichtung nicht) störungsbedingt verloren gegangen ist. In einem solchen Fall kann die zentrale Schalteinrichtung die das entsprechende teilzentrale Schaltglied betreffenden Betriebszustandsdaten nicht nur überhaupt erhalten und die richtigen Schlußfolgerungen daraus ableiten, sondern sie kann jene in der Regel sogar noch zu einem früheren Zeitpunkt erhalten als im Falle von Störungsfreiheit, also beschleunigt. Die zentrale Schalteinrichtung kann erkennen, daß eine eingetretene Störung nicht in dem teilzentralen Schaltglied selbst liegt, sondern z.B. in der betreffenden Datenleitung, und zwar irgendwo im Übertragungsweg von der zentralen Schalteinrichtung zu diesem Schaltglied. Hierbei wird durch die Erfindung der Tatsache Rechnung getragen, daß die teilzentralen Schaltglieder universell einsetzbar sind für Schalteinrichtungen älterer und neuerer Bauart. Obwohl eine zentrale Schalteinrichtung die jeweilige Art ihrer Bauart im störungsfreien Betrieb mit der Abgabe des jeweiligen Abfragesignales zu erkennen gibt, und obwohl dieses im Falle einer eingetretenen Störung von dem teilzentralen Schaltglied nicht erhalten werden kann, und obwohl in diesem Falle also das teilzentrale Schaltglied nicht (aus einem Abfragesignal) zu erkennen vermag (nämlich weil ein solches ja fehlt), ob es mit einer zentralen Schalteinrichtung älterer oder neuerer Bauart zusammenarbeitet, kann das teilzentrale Schaltglied auch im Störungsfalle die abzugebenden Daten jeweils in der richtigen Form und in dem erforderlichen Umfang zur zentralen Schalteinrichtung hin abgeben.

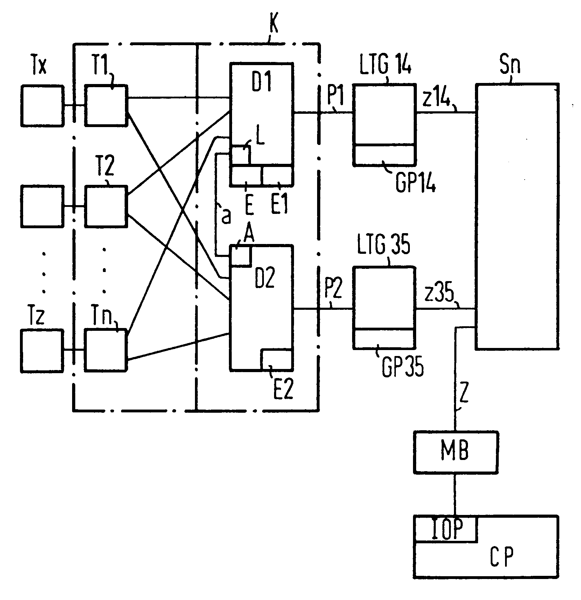

In der Zeichnung ist ein Auführungsbeispiel der Erfindung nur in wesentlich zu ihrem Verständnis beitragenden Bestandteilen dargestellt, worauf dieselbe jedoch keinesweg beschränkt ist. Dargestellt in der Zeichnung ist ein digitaler Konzentrator, der an eine PCM-Fernsprechvermittlungsstelle angeschlossen ist. PCM-Fernsprechvermittlungsstellen sowie digitale Konzentratoren können hier als an sich bekannt vorausgesetzt werden. Hierzu sei auf die Zeitschrift "telcom report" und zwar einerseits auf das Beiheft "Digitalvermittlungssystem EWSD" (4. Jahrgang/1981) und andererseits auf die englischsprachige Ausgabe dieser Zeitschrift, Heft 5 vom Jahrgang 1982 hingewiesen. Darüber hinaus sind digitale Konzentratoren auch in den Deutschen Offenlegungsschriften 3 512 273 und 3 512 274 beschrieben. Außerdem ist auch noch auf die Deutschen Offenlegungsschriften 3 609 889 und 3 609 890 hinzuweisen.

In der Zeichnung ist als ein teilzentrales Schaltglied ein Konzentrator K angedeutet. Zu ihm gehören als dezentrale Schaltungseinheiten Teilnehmeranschlußschaltungen Tl bis Tn, die in an sich bekannter Weise einzeln Konzentratorteilnehmerstellen Tx bis Tz zugeordnet sind.

Der Konzentrator K ist über zwei PCM-Leitungen mit je einer Anzahl von z.B. 32 Kanälen an eine übergeordnete Vermittlungsstelle und zwar in dieser an zwei verschiedene Anschlußgruppen LTG14 und LTG35 angeschlossen, die ihrerseits in an sich bekannter Weise verbunden sind über Zeitmultiplexleitungen z14 und z35 mit einem zentralen Koppelfeld Sn dieser Vermittlungsstelle. An das Koppelfeld ist außerdem über eine Zeitmultiplexleitung Z ein Zwischenspeicher MB angeschlossen und mit diesem steht ein zentraler Prozessor CP über einen Eingabe-Ausgabe-Prozessor IOP in Verbindung. Jede Anschlußgruppe weist u.a. einen Gruppenprozessor (GP14 bzw. GP35) auf. Jeder der Gruppenprozessoren steht über einen eigenen Datenkanal mit dem zentralen Prozessor CP in Datenaustausch. Dieser Datenkanal ist über das Koppelfeld Sn durchgeschaltet und befindet sich ständig im betriebsbereiten Zustand. Diese und weitere Zusammenhänge werden als bekannt vorausgesetzt, weil sie in größerer Auführlichkeit in der obengenannten Zeitschrift "telcom report" beschrieben sind. In der englischsprachigen Ausgabe der genannten Zeitschrift sowie in den genannten Offenlegungsschriften ist auch die Zusammenarbeit eines digitalen Konzentrators mit einem zentralen Prozessor beschrieben.

Die jeweils eine größere Anzahl von Teilnehmeranschlußschaltungen mit ihren Teilnehmerstellen (auch als dezentrale Schaltungseinheiten bezeichnet) enthaltenden und als digitale Konzentratoren ausgebildeten teilzentralen Schaltglieder stehen also in Datenaustausch mit dem zentralen Prozessor. Hierbei wirken die Gruppenprozessoren der Anschlußgruppen in an sich bekannter Weise mit; ein Teil der von den Teilnehmerstellen abgegebenen und im betreffenden Konzentrator gesammelten und zwischengespeicherten Daten wird auch bereits von diesen Gruppenprozessoren verarbeitet. Teilweise werden diese Daten auch mit Hilfe dieser Gruppenprozessoren vorverarbeitet zum zentralen Prozessor weitergegeben. Dies ist in den genannten älteren Druckschriften in großer Ausführlichkeit beschrieben und wird hier als bekannt vorausgesetzt. Die von den Teilnehmerstellen stammenden Daten werden nun zunächst vom Konzentrator K abgerufen; dieser ruft sie in an sich bekannter Weise bei den zugeordneten Teilnehmeranschlußschaltungen Tl bis Tn ab. Diese Daten werden im Konzentrator mit Hilfe seiner Konzentratorprozessoren D1 und D2 abgerufen und zwischengespeichert. Jeweils an einer Verbindungsherstellung ist immer nur ein einziger Konzentratorprozessor beteiligt. Jedoch kann jeder der beiden Konzentratorprozessoren jede Verbindung herstellen; hat jedoch einer der Konzentratorprozessoren an der Herstellung einer Verbindung einmal begonnen, so führt auch nur er diese Verbindungsherstellung weiterhin bis zur endgültigen Verbindungsdurchschaltung durch. Die Daten werden in einem Speicher des Konzentratorprozessors zwischengespeichert, bis sie vom jeweiligen Gruppenprozessor oder vom übergeordneten zentralen Prozessor beim betreffenden Konzentratorprozessor abgefragt werden. Ruft der zentrale Prozessor diese Daten ab, so kann hierbei der jeweilige Gruppenprozessor in der an sich bekannten Weise mitwirken.

Das zuvor angesprochene Abfragen durch den zentralen Prozessor (sowie durch die ihn dabei unterstützenden Gruppenprozessoren) erfolgt in bestimmten Zeitabständen. Sowohl die Gruppenprozessoren, als auch der zentrale Prozessor wickeln ihre Abfragevorgänge in an sich bekannter Weise zyklisch ab, indem sie die betreffenden Daten einzeln nacheinander an den verschiedenen Stellen abfragen. So werden also die Daten, die von den Schaltungseinheiten (Teilnehmeranschlußschaltungen mit Teilnehmerstellen) stammen, und die von den Konzentratorprozessoren abgerufen und zwischengespeichert werden, mit einem gewissen Zeitverzug gegenüber dem jeweiligen Beginn ihres Vorliegens abgefragt durch den zentralen Prozessor bzw. die Gruppenprozessoren; beim Abfragen durch den zentralen Prozessor können - wie gesagt - die Gruppenprozessoren in der angegebenen Weise auch mitwirken. In diesem Zusammenhang können Daten pro dezentrale Schaltungseinheit im betreffenden Konzentratorprozessor im Zusammenhang mit der hier erforderlichen Zwischenspeicherung auch gesammelt werden.

Die Datenabrufvorgänge, Datensammelvorgänge und Datenzwischenspeicherungsvorgänge werden also Mittels Konzentratorprozessoren D1 und D2 abgewickelt. Bestandteil dieser Konzentratoren sind deshalb Datenabrufsammelspeicher. Sie dienen der Funktion des Datenabrufs, der Datensammlung und der Datenzwischenspeicherung. Diejenigen Bestandteile in den Konzentratoren, die einer Realisierung dieser Funktionen dienen, bilden also u.a. jeweils die beiden Datenabrufsammelspeicher in den beiden Konzentratorprozessoren eines jeden Konzentrators. Die Schaltvorgänge gemäß den zuvor angesprochenen Funktionen werden von den Konzentratorprozessoren D1 und D2 in zyklischem Umlauf über alle Teilnehmeranschlußleitungen Tl bis Tn durchgeführt, die also dem betreffenden Konzentrator K zugeordnet sind. Die Datenabrufsammelspeicher in jedem der Konzentratoren werden dann auf ein Vorliegen zwischengespeicherter Daten abgefragt. Dies geschieht in der beschriebenen Weise durch den zentralen Prozessor, wobei Gruppenprozessoren in der an sich bakannten Weise mitwirken können.

Wie bereits angegeben wurde, werden Daten zweierlei Art abgerufen, gesammelt und zwischengespeichert mit Hilfe der Konzentratorprozessoren, um dann von den Gruppenprozessoren und/oder vom zentralen Prozessor abgefragt zu werden. Daten einer ersten Art mögen z.B. sämtliche für den laufenden Vermittlungsbetrieb erforderliche Daten sein, wie z.B. Teilnehmeranruf, Wahlkennzeichen und dergleichen. Daten einer zweiten Art mögen z.B. Betriebszustandsdaten sein, die darüber Auskunft geben, in welchem Betriebszustand sich die betreffenden Bestandteile der Vermittlungsanlagen befinden, z.B. in ungestörtem oder in gestörtem Betriebszustand. Diese Betriebszustandsdaten werden ebenfalls in den Konzentratoren von den dezentralen Schaltungseinheiten in ihnen abgerufen, gesammelt und zwischengespeichert.

Bei diesen dezentralen Schaltungseinheiten kann es sich um mehr handeln als nur um die Teilnehmeranschlußschaltungen, z.B. um Rufgeneratoren, Tongeneratoren, Spannungsversorgungseinrichtungen und dergleichen. Auch um deren Betriebszustand kann es bei den Daten der zweiten Art gehen. Ferner können die genannten Betriebszustandsdaten auch verschiedene Betriebszustände pro Teilnehmeranschluß angeben, z.B. daß eine bestimmte Teilnehmerleitung eine Unterbrechung oder einen Kurzschluß aufweist, oder daß in der betreffenden Teilnehmeranschlußschaltung die Teilnehmer-Speisespannung ausgefallen ist, oder daß ein Blitzeinschlag in eine Teilnehmerfreileitung erfolgt ist und in der betreffenden Teilnehmeranschlußschaltung Zerstörungen angerichtet hat. Es werden also auch in der gleichen Weise diese Daten der zweiten Art abgerufen, gesammelt und im jeweiligen Konzentrator zwischengespeichert.

Es ist nun u.a. vorgesehen, daß ein erster Datenabrufsammelspeicher (in D1) außer Daten der ersten Art (in E1) auch Daten der zweiten Art (in E), dagegen ein zweiter Datenabrufsammelspeicher (in D2) nur Daten der ersten Art (in E2) abruft, sammelt und zwischenspeichert. Hierzu weist der eine der beiden Konzentratorprozessoren D1 einen Speicher E1 für die Daten der ersten Art und einen Speicher E für die Daten der zweiten Art auf. Dagegen weist der andere Konzentratorprozessor D2 nur einen Speicher E2 für die Daten der ersten Art auf. Also nur der erste Konzentratorprozessor D1 im Konzentrator K hat die Aufgabe, auch die Daten der zweiten Art von den verschiedenen Indikationsstellen z.B. in den Teilnehmeranschlußschaltungen u.a.m. (s.o.) abzurufen, zu sammeln und in seinem Speicher E zwischenzuspeichern. Der andere Konzentratorprozessor D2 ist mit dieser Aufgabe nicht belastet und in ihm sind die dafür erforderlichen Einrichtungen zum Abrufen, Sammeln und Zwischenspeichern nicht vorhanden. Der erste Datenabrufsammelspeicher im ersten Konzentratorprozessor D1 umfaßt also einen Speicher E1 für die Daten der ersten Art und einen Speicher E für die Daten der zweiten Art, wohingegen der zweite Datensammelspeicher im zweiten Konzentratorprozessor D2 nur einen Speicher E2 für die Daten der ersten Art enthält.

Wie ausgeführt wurde, fragen die Gruppenprozessoren und der zentrale Prozessor zyklisch laufend die Konzentratorprozessoren in jedem der Konzentratoren auf ein Vorliegen von Daten der ersten und der zweiten Art ab, wobei Gruppenprozessoren in der angegebenen Weise mitwirken können, indem sie einen Teil dieser Funktionen übernehmen. Das Abfragen der Daten der ersten Art dient in der angegebenen Weise zur Abwicklung des Vermittlungsbetriebes. Dieses Abfragen geschieht relativ häufig in relativ kurzen Zeitabständen, damit in der Herstellung und Durchschaltung von Verbindungen keine unerwünschten und unnötigen Verzögerungen eintreten. Das Abfragen der Daten der zweiten Art dagegen geschieht weniger häufig, und zwar in bestimmten vorgegebenen vergleichsweise (s.o.) größeren Zeitabständen. Der erste Datenabrufsammelspeicher in jedem der Konzentratorprozessoren in jedem der Konzentratoren wird also laufend in relativ kleinen Zeitabständen auf ein Vorliegen von Daten der ersten Art und andererseits in vorgegebenen relativ größeren Zeitabständen auf ein Vorliegen von Daten der zweiten Art abgefragt. Die zweiten Datenabrufsammelspeicher in jedem der Konzentratoren werden laufend nur auf ein Vorliegen von kurzzeitig zwischengespeicherten Daten der ersten Art abgefragt.

Es kann nun der Fall eintreten, daß sich hinsichtlich des Abfragens eines Konzentratorprozessors durch den zentralen Prozessor - gegebenenfalls unter Mitwirkung des betreffenden Gruppenprozessors - Störungen bemerkbar machen. Diese können darin bestehen, daß die Zeitmultiplexleitung P1 oder die Zeitmultiplexleitung z14 von einer Störung betroffen wurde oder auch die Anschlußgruppe LTG14 oder deren Gruppenprozessor, oder daß solche Störungen auch in Kombination eingetreten sind. Sie können auch in einer Betriebsüberlastung der genannten Anschlußgruppe (bzw. ihres Gruppenprozessors) oder der betreffenden PCM-Leitung, z.B. P1, bestehen. Welcher Art die eingetretene Störung auch ist - jedenfalls stellt der zentrale Prozessor CP fest, daß er mit dem ersten Konzentratorporzessor des betreffenden Konzentrators aus irgendwelchen Gründen nicht in der gewünschten Weise in Verbindung treten kann. Der Vermittlungsbetrieb dieses Konzentrators kann dann zwar noch über seinen zweiten Konzentratorprozessor D2 und den über die PCM-Leitungen P2 und z35 verlaufenden Weg weitergeführt werden (vgl. u.a. die DE-OS 3 224 459), aber der zentrale Prozessor CP kann dann an die im ersten Konzentratorprozessor zwischengespeicherten zweiten Daten zwecks Abfragens über den über die PCM-Leitung P1 verlaufenden Weg nicht mehr wie im störungs-, bzw. überlastungsfreien Zustand herankommen. Diese zweiten Daten liegen zwar gesammelt und zwischengespeichert im Datenabrufsammelspeicher des ersten Konzentratorprozessors für die Abfrage durch den zentralen Prozessor bereit, aber über die PCM-Leitung P1 ist ihm dafür zur Zeit störungsbedingt o.ä. der freie Zugang nicht gegeben.

Für den zuvor angesprochenen Fall ist gemäß einer Ausführungsform des erfindungsgemäßen Ausführungsbeispiels vorgesehen, daß der erste Datenabrufsammelspeicher die von ihm abgerufenen, gesammelten und zwischengespeicherten Daten auf andere Weise dem zentralen Prozessor zuführt. In dem ersten Abrufsammelspeicher (D1) wird mittels einer zur Leseeinrichtung L gehörenden Zeitmeßeinrichtung überwacht, ob der Zeitabstand zwischen jeweils einem Abgefragtwerden auf Daten der ersten Art durch den zentralen Prozessor über den Gruppenprozessor GP14 der Anschlußgruppe LTG14 und einem nächstfolgenden Abgefragtwerden auf Daten der ersten Art einen in der Zeitmeßeinrichtung festgelegten Zeitgrenzwert überschreitet. Stellt der Abrufsammelspeicher mit Hilfe seiner Zeitmeßeinrichtung eine solche Zeitüberschreitung bezüglich des Abgefragtwerdens auf Daten der ersten Art fest, so liest er zerstörungsfrei die Daten der zweiten Art aus seinem zweiten Speicher E und überträgt sie über LTG14 an den zentralen Prozessor. Zweckmäßig erfolgt dies konktinuierlich wiederholt.

Bei diesem Störungsfall kann der Übertragungsweg über die PCM-Leitungen P1 und z14 völlig gestört sein. Dann bleibt die zuvor beschriebene Übermittlung der Daten der zweiten Art ergebnislos. Die Daten werden zwar ausgesendet, kommen aber nicht an. Ebenso erhält der zentrale Prozessor die Daten der zweiten Art über den Weg der zuletzt genannten beiden PCM-Leitungen dann nicht, wenn auf diesem Weg lediglich der Kanal für die Übertragungsrichtung vom Konzentratorprozessor D1 zum zentralen Prozessor nicht übertragungsbereit ist. Denn in diesem Fall trifft das Abfragesignal des zentralen Prozessors zwar beim Konzentratorprozessor ein, und dieser gibt die Daten der zweiten Art auf dem genannten Weg ab; jedoch werden sie störungshalber nicht über diesen übermittelt. Wenn dieser Weg aber in der letztgenannten Übertragungsrichtung übertragungsbereit ist, jedoch nicht in der umgekehrten Übertragungsrichtung, also nicht vom zentralen Prozessor zum Konzentratorprozessor, so erhält dieser das Abfragesignal des zentralen Prozessors für Daten der ersten Art nicht mehr. Die Zeitmeßeinrichtung veranlaßt dann in der beschriebenen Weise das Lesen der Daten der zweiten Art und deren Aussendung über den zuvor genannten Weg. In einem solchen Fall kann der zentrale Prozessor die den entsprechenden Konzentrator betreffenden Betriebszustandsdaten nicht nur überhaupt erhalten und die richtigen Schlußfolgerungen daraus ableiten, sondern er kann jene sogar in der Regel noch zu einem früheren Zeitpunkt erhalten als im Falle von Störungsfreiheit, also beschleunigt. Denn das teilzentrale Schaltglied erkennt bereits am Ausbleiben eines Abfragesignals für Daten der ersten Art die Betriebsstörung am Übertragungsweg von der zentralen Schalteinrichtung zum betreffenden teilzentralen Schaltglied und wartet in diesem Betriebsfall nicht bis zu einem Abfragesignal für die Daten der zweiten Art, sondern sendet diese aufgrund der erkannten Zeitgrenzwert-Überschreitung hiernach sofort aus. Der zentrale Prozessor kann erkennen, daß eine eingetretene Störung nicht in dem betreffenden Konzentrator selbst liegt, sondern z.B. auf dem betreffenden Datenweg, und zwar irgendwo im Übertragungsweg vom zentralen Prozessor zu dem betreffenden Konzentrator. Ähnlich Vorteile ergeben sich, wenn die Daten der ersten und die der zweiten Art im Zusammenhang mit anderen Anwendungsfällen übermittelt werden (s.o.).

Gemäß einer anderen Ausführungsform des erfindungsgemäßen Ausführungsbeispiels ist vorgesehen, daß der erste Datenabrufspeicher im Störungsfall, also nach Feststellung der oben bereits beschriebenen Zeitüberschreitung, ebenfalls die gesammelten und in ihm zwischengespeicherten Daten der zweiten Art zerstörungsfrei und vorzugsweise kontinuierlich aus seinem hierfür vorgesehenen Speicher E mittels einer Leseeinrichtung L liest. Ferner aber ist hierbei vorgesehen, daß er sie dann über eine Hilfsleitung a zu einer Abfragestelle A im zweiten Konzentratorprozessor D2 laufend überträgt. Dadurch stehen sie hier ohne eine weitere Zwischenspeicherung kontinuierlich für den zentralen Prozessor empfangsbereit zur Verfügung.

Die im Speicher E gesammelten und zwischengespeicherten Daten der zweiten Art werden also in diesem Falle mittels der Leseeinrichtung L zerstörungsfrei gelesen aus dem Speicher E und vorzugsweise kontinuierlich wiederholt gemäß dieser Ausführungsvariante über den Weg a weitergegeben. Bei Eintreten dieses Störungsfalles stellt auch der zentrale Prozessor CP in der oben angegebenen Weise, nämlich anhand eines Ausbleibens von abgefragten Daten der ersten Art, also anhand der Tatsache, daß er nach Abgabe eines entsprechenden Abfragesignales an den betreffenden Konzentratorprozessor keine entsprechenden Daten von diesem erhält, fest, daß er momentan keinen ungestörten Zugang hat zu dem ersten Konzentratorprozessor des betreffenden Konzentrators; in diesem Fall steuert er dann sofort über die PCM-Leitungen z35 und P2 und über die Anschlußgruppe LTG35 den zweiten Konzentratorprozessor des betreffenden Konzentrators an. Dabei kann es sein, daß der zentrale Prozessor dies entweder dann feststellt, wenn er Daten der zweiten Art vom betreffenden ersten Konzentratorprozessor abfragen möchte oder dann, wenn er Daten der ersten Art von ihm abfragen möchte. Wenn also der zentrale Prozessor beim Abfragen des betreffenden ersten Konzentratorprozessors auf Daten ersten Art oder auf Daten der zweiten eine Störung der zu jenem führenden Datenleitung feststellt, so steuert er sofort den zweiten Konzentratorprozessor des betreffenden Konzentrators über den ihm entsprechenden Weg (z35, LTG35, P2) an; und zwar steuert er in diesem Konzentratorprozessor die Abfragestelle A an. Er empfängt dann über diese die kontinuierlich empfangsbereit über den Weg a zur Verfügung stehenden zweiten Daten, die die Leseeinrichtung L hierzu vom ersten Konzentratorprozessor über den Weg a laufend hintereinander weg zur Abfragestelle A hin abgibt. Ohne einen dem Zwischenspeicher E entsprechenden Speicher im zweiten Konzentratorprozessor D2 können also die im Konzentrator K von den einzelnen Indikationsstellen abgerufenen, gesammelten und zwischengespeicherten Daten der zweiten Art auch über den zweiten Konzentratorprozessor durch den zentralen Prozessor hereingeholt werden.

Von besonderer Bedeutung in diesem Zusammenhang ist die Tatsache, daß der zentrale Prozessor (unter Mitwirkung des betreffenden Gruppenprozessors, s.o.!) das Hereinholen der Daten der zweiten Art vom Konzentratorprozessor D1 dann über die Abfragestelle A im Konzentratorprozessor D2 sofort in die Wege leitet, wenn er beim Abfragen des Konzentratorprozessors D1 über den direkten Weg (z14, GP14, P1) durch Störung o.ä. sich gehindert sieht; von besonderer Bedeutung ist dabei, daß dies nicht nur beim Versuch des Abfragens von Daten der zweiten Art sondern in der Regel bei einem - wie oben angegeben - der viel schneller, also in viel kürzeren Zeitabständen aufeinanderfolgenden Vorgänge der Abfrage von Daten der ersten Art, also im Mittel zu einem wesentlich früheren Zeitpunkt geschieht. In der Regel erkennt der zentrale Prozessor also eine solche Störung o.ä. bei einem Versuch der Abfrage von Daten der ersten Art vom Konzentratorprozessor D1 und leitet hierdurch veranlaßt sofort ein Hereinholen der zweiten Art von diesem Konzentratorprozessor über die Abfragestelle A im Konzentratorprozessor D2 ein. Der betreffende Konzentratorprozessor erkennt eine solche Störung auch früher, und zwar nicht erst, wenn die Abfrage der Daten der zweiten Art ausbleibt, sondern bereits dann, wenn bezüglich des Zeitabstandes zwischen zwei Abfragen auf Daten der ersten Art die oben erläuterte Zeitgrenzwert-Überschreitung eintritt.

Es ist also vorgesehen, daß das angesprochene zerstörungsfreie Lesen der Daten der zweiten Art aus dem Speicher E mittels der Leseeinrichtung L und die Weitergabe dieser Daten an die Abfragestelle A in Abhängigkeit davon gestartet wird, daß der betreffende erste Konzentratorprozessor eine Störung feststellt, z.B. seines Datenweges P1, insbesondere dadurch, daß er über eine zu lange Zeit überhaupt nicht mehr vom zentralen Prozessor abgefragt wurde, also abgefragt hinsichtlich von Daten nicht nur der zweiten Art, sondern auch von Daten der ersten Art. Hierzu ist im Konzentratorprozessor D1 die Zeitmeßeinrichtung, z.B. bei L, vorgesehen, die den Zeitablauf jeweils von einem Abgefragtwerden durch den zentralen Prozessor bis zum nächsten Abgefragtwerden abmißt und bei Überschreitung eiens festgelegten Grenzwertes das zerstörungsfreie Lesen der Daten der zweiten Art aus dem Speicher E startet, welche dann von diesem Zeitpunkt an übertragen werden. Dieser Grenzwert ist also ein festgelegtes Zeitmaß. Überschreitet der Zeitabstand von einem Abfragevorgang für Daten der ersten Art bis zum artgleichen nächsten Abfragevorgang dieses festgelegte Zeitmaß, so wird das kontinuierliche zerstörungsfreie Lesen der Daten der zweiten Art aus dem Speicher E sowie deren Übertragung gestartet. Der Grenzwert ist also so festgegt, daß er dem größtmöglich vorkommenden Zeitabstand zwischen zwei aufeinander folgenden Abfragevorgängen entspricht.

Schließlich ist auch noch auf weitere Zusammenhänge des erfindungsgemäßen Ausführungsbeispieles hinzuweisen. Wie ausgeführt wurde, wickelt der zentrale Prozessor CP die Abfragevorgänge mit Hilfe der Anschlußgruppen und der in ihnen enthaltenen Gruppenprozessoren ab. Es gibt nun Anschlußgruppen LTG älterer und solche neuer Bauart und/oder Arbeitsweise (Hardware und/oder Software). Diese unterscheiden sich u.a. dadurch, daß sie die Daten der zweiten Art in zweierlei Umfang aufzunehmen und weiterzuleiten eingerichtet sind. Anschlußgruppen der älteren Bauart und/oder Arbeitsweise sind für ein Abfragen, Empfangen und Weiterleiten nur eines festgelegten kleinen Rahmens von Daten der zweiten Art, dagegen Anschlußgruppen der neuen Art für einen festgelegten großen Rahmen von Daten der zweiten Art eingerichtet. Ein solcher großer Rahmen von Daten der zweiten Art möge Betriebszustandsdaten von jeder Teilnehmeranschlußschaltung, ferner von einem Rufgenerator, einem Tongenerator, von einer Betriebsspannungsquelle u.dgl. umfassen. Ein kleiner Rahmen von Daten möge auf eine Angabe über den Betriebszustand der Betriebsspannungsquelle beschränkt sein.

Was zuvor über Anschlußgruppen älterer und neuerer Bauart ausgeführt wurde, trifft auch für Aufbau und Arbeitsweise des zentralen Prozessors CP zu. Ältere und neuere Anschlußgruppen bzw. ältere und neuere zentrale Prozessoren unterscheiden sich in diesem Zusammenhang u.a. auch dadurch, daß sie die Konzentratorprozessoren auf verschiedene Weise auf die Daten der zweiten Art abfragen, z.B. durch unterschiedliche Abfragesignale, vorzugsweise durch ein einmaliges Abfragesignal bzw. durch ein innerhalb einer überwachten, definierten Zeitspanne wiederholtes Abfragesignal. Konzentratorprozessoren wie D2, d.h. solche älterer Bauart und/oder Arbeitsweise, die keinen Speicher E haben, reagieren hierauf gleichartig, indem sie Daten der zweiten Art auf jede Abfrage in gleicher Weise liefern; und zwar geben sie eine ihren Betriebszustand betreffende Information, die in ihnen funktionell vorliegt, z.B. eine Information über das Vorhandensein der vom Ruf- und Zählspannungsgenerator zu liefernden Spannungen (s.o.). Diese Information liegt also funktionell im Konzentratorprozessor unmittelbar vor und es bedarf hierfür keines Abrufens, keines Sammelns und keines Speicherns mit Hilfe eines für Daten der zweiten Art erforderlichen Abrufsammelspeichers. Konzentratorprozessoren mit einem Speicher E dagegen liefern die Daten der zweiten Art auf ein einmaliges Abfragesignal in dem genannten kleinen Rahmen, dagegen auf ein kurz nacheinander wiederholtes Abfragesignal die Daten der zweiten Art in dem genannten großen Rahmen, wie weiter oben im Detail ausführlich beschrieben.

Wenn nun die PCM-Leitung P1 oder z14 in der Weise gestört oder überlastet ist, daß der Prozessor CP die Daten der zweiten Art überhaupt nicht über die Anschlußgruppe LTG14 vom Konzentratorprozessor D1 erhalten kann, versucht er es in der weiter oben ausführlich beschriebenen Weise über die Anschlußgruppe LTG35. Diese nun fragt beim Konzentratorprozessor D2 wie beschrieben an. Wenn nun hier ein Abfragesignal eintrifft, vermag dieser Konzentratorprozessor D2 deshalb, weil er ein Konzentratorprozessor älterer Bauart und/oder Arbeitsweise ist, nicht zu unterscheiden, ob es sich bei dem erhaltenen Abfragesignal um ein innerhalb definierten Zeitspanne einmaliges oder wiederholtes Abfragesignal gehandelt hat. Deshalb ist vorgesehen, daß der Konzentratorprozessor D1, der also dafür eingerichtet ist, mit einem zentralen Prozessor älterer und neuerer Bauart sowie einer Anschlußgruppe einschließlich Grupppenprozessor älterer und neuerer Bauart zusammenzuarbeiten, speichert, ob er - angefragt von der Anschlußgruppe LTG14 - es mit einer Anschlußgruppe älterer Bauart und/oder Arbeitsweise, bzw. mit entsprechendem zentralem Prozessor, zu tun hat, im vorliegenden Falle (LTG14) also mit einer Anschlußgruppe neuer Bauart und/oder Arbeitsweise bzw. entsprechendem zentralem Prozessor. Generell registriert der Konzentratorprozessor D1 dies und speichert es. Der Konzentratorprozessor D1 hat also von früheren Abfragen her, z.B. bei der ersten Abfrage nach Betriebsbeginn, die Information gespeichert, ob er es mit einer Anschlußgruppe älterer Bauart und/oder Arbeitsweise oder einer solchen neuer Bauart und/oder Arbeitsweise zu tun hat. Diese Speicherung ist also eine langfristige. Demgemäß liefert er die Daten der zweiten Art nach Maßgabe dieser Speicherung in der weiter oben beschriebenen Weise entweder immer in kleinem Rahmen oder immer im großen Rahmen, und zwar sowohl über die PCM-Leitung P1, wenn diese für die Abfrage benutzt wird, als auch dann, wenn bei der erwähnten Zeitüberschreitung ein Abfragesignal zwar ausbleibt aber aufgrund der Feststellung dieser Zeitüberschreitung die betreffenden Daten der zweiten Art über den Weg P1/LTG14/z14 in der beschriebenen Weise übermittelt werden, als ferner auch dann, wenn diese überhaupt nicht benutzt werden kann (wegen einer Störung oder wegen Betriebsüberlastung), wenn also in der beschriebenen Weise aushilfsweise nur die PCM-Leitungen P2 und z35 benutzt werden können. Er liefert die Daten der zweiten Art dann also in der weiter oben beschriebenen Weise, also entweder über den Weg P1/LTG14/z14 oder über den Weg a und über die Abfragestelle A und den Weg P2/LTG35/z35, und ferner nach Maßgabe der zuvor angesprochenen, in ihm gespeicherten Information bezüglich des erläuterten kleinen Rahmens oder großen Rahmens, die er beim Abgefragtwerden bei früheren Abfragevorgängen aus dem betreffenden Abfragesignal bzw. den betreffenden (wiederholten) Abfragesignalen abgeleitet hat, die also besagt, ob die Daten der zweiten Art von der zugeordneten Anschlußgruppe, z.B. LTG14, und/oder vom zentralen Prozessor jeweils von diesem Konzentratorprozessor immer im kleinen Rahmen oder im großen Rahmen erwartet werden.

Über den Weg P1/LTG14/z14 oder den Weg a und die Abfragestelle A werden also die Daten der zweiten Art im kleinen Rahmen oder auch im großen Rahmen geliefert, obwohl der Konzentratorprozessor D1 in diesem störungsbedingten Betriebsfalle bzw. der Konzentratorprozessor D2 überhaupt nicht zu erkennen imstande ist, daß die Abfrage unwiederholt oder wiederholt innerhalb der definierten Zeitspanne stattgefunden hat, und daß damit eine Anforderung vorliegt, die Daten der zweiten Art entweder im kleinen oder im großen Rahmen verlangt. Er liefert die Daten im erwähnten kleinen bzw. großen Rahmen vielmehr alleine aufgrund der früher über den Weg der dann noch funktionsfähig gewesenen PCM-Leitung P1 übertragenen Abfragesignale, genauer gesagt aufgrund der in der jedesmal nur einmaligen, bzw. zweimaligen, Übertragung des Abfragesignales innerhalb der überwachten definierten Zeitspanne enthaltenen und im Konzentratorprozessor D1 gespeicherten Information darüber, daß die Anschlußgruppe LTG14 eine Anschlußgruppe älterer bzw. neuerer Bauart und/oder Arbeitsweise ist, (entsprechendes gilt für den zentralen Prozessor) und daß die Daten der zweiten Art in dem beschriebenen kleinen bzw. großen Rahmen erwartet werden, was nicht alleine die betreffenden Gruppenprozessoren sondern auch den zentralen Prozessor betrifft.

Es kann nämlich auch der Fall sein, daß die Anschlußgruppe LTG14 einschließlich ihrem Gruppenprozessor GP14, sowie der zentrale Prozessor CP neuerer Bauart und/oder Arbeitsweise sind (Daten der zweiten Art werden im großen Rahmen erwartet), dagegen die Anschlußgruppe LTG35 einschließlich ihrem Gruppenprozessor GP35 von alter Bauart und/oder Arbeitsweise ist (Daten der zweiten Art werden in kleinem Rahmen erwartet). Für diesen Fall ist Vorsorge getroffen durch die Speicherung der aus dem Abfragesignal bei früheren Abfragen resultierenden Art-Information in dem Konzentratorprozessor D1 darüber, daß die Anschlußgruppe LTG14 und der zentrale Prozessor CP die Daten der zweiten Art in dem erwähnten großen Rahmen erwarten (insbesondere letzterer). Müssen nun die Daten der zweiten Art vom Konzentratorprozessor D1 über den Weg a und über die Anschlußstelle A im Konzentratorprozessor D2 zum zentralen Prozessor CP in der beschriebenen Weise übermittelt werden, so kann der zentrale Prozessor also die Daten der zweiten Art im großen Rahmen bekommen, und zwar unbeschadet der Tatsache, daß die Anschlußgruppe LTG35 und der Konzentratorprozessor D2 von älterer Bauart und/oder Arbeitsweise sind, also selber nicht für ein Abfragen der Daten der zweiten Art in großem Rahmen eingerichtet sind. Entsprechendes gilt im Falle des Beispiels, daß die Anschlußgruppe LTG14 von älterer Bauart ist, dagegen die Anschlußgruppe LTG35 von neuerer Bauart ist, und daß der zentrale Prozessor von neuerer Bauart ist. Dann werden die Daten der zweiten Art vom Konzentratorprozessor D1 auch bei Benutzung des Weges über a und A sowie P2/LTG35/z35 im kleinen Rahmen abgegeben aufgrund der beschriebenen Speicherung, nämlich weil der zentrale Prozessor die Daten der zweiten Art vom Konzentratorprozessor D1 normalerweise (also im störungsfreien Betriebsfall) über die Anschlußgruppe LTG14 - in diesem Beispiels-Falle von älterer Bauart - erhält, d.h. im kleinen Rahmen.

Der Konzentratorprozessor D1, der für ein Abrufen, Sammeln und Zwischenspeichern der Daten der zweiten Art im großen Rahmen eingerichtet ist, kann aber auch mit Anschlußgruppen und mit einem zentralen Prozessor CP älterer Bauart und/oder Arbeitsweise zusammenarbeiten. In diesem Falle wird er immer nur mit einem einmaligen Abfragesignal auf Daten der zweiten Art abgefragt und erkennt hieraus, daß er die Daten der zweiten Art nur im kleinen Rahmen zu geben hat. Dies gilt sowohl für ein Abgeben der Daten der zweiten Art über die PCM-Leitung P1 als auch für die Abgabe der Daten der zweiten Art über den Weg a und die Anschlußstelle A und die PCM-Leitungen P2 und z35 in der im einzelnen beschriebenen Weise.

## Patentansprüche

1. Schaltungsanordnung für Fernmeldeanlagen, insbesondere Fernsprechvermittlungsanlagen, in denen
- eine zentrale Schalteinrichtung (CP), z.B. ein Prozessor, über eine Datenleitung (Z, z14, P1 bzw. Z, z35, P2) mit einem teilzentralen Schaltglied (K), z.B. einem Konzentrator, verbunden ist, und
- das Schaltglied einen Speicher aufweist, der durch die Schalteinrichtung in regelmäßiger Folge auf ein Vorliegen von zwischengespeicherten Daten abgefragt wird, und
- in dem Schaltglied Mittel zum Überwachen des Zeitabstandes zwischen zwei aufeinanderfolgenden Abfragen auf eine Überschreitung eines festgelegten Zeitgrenzwertes vorgesehen sind,
**dadurch gekennzeichnet**, daß
- die Schalteinrichtung nach Maßgabe ihrer Bauart, insbesondere älterer und neuerer Bauart, zur Aufnahme von Daten in Rahmen jeweils unterschiedlicher Länge eingerichtet ist, und
- das Schaltglied für eine Zusammenarbeit mit zentralen Schalteinrichtungen zweierlei Bauart, insbesondere älterer und neuerer Bauart, eingerichtet ist, und
- das Schaltglied Mittel zum Erkennen der Bauart der Schalteinrichtung nach Maßgabe eines bauartspezifischen Abfragesignales enthält, und
- Mittel zum Übertragen der Daten von dem Schaltglied zu der Schalteinrichtung nach Maßgabe der erkannten Bauart in Rahmen entsprechender Länge vorgesehen sind,
- die in dem Speicher zwischengespeicherten Daten bei Feststellung einer Überschreitung des Zeitgrenzwertes kontinuierlich und zerstörungsfrei ausgelesen sowie kontinuierlich wiederholt zu der Schalteinrichtung übertragen werden, und
- in dem Schaltglied Mittel zum Speichern der aus dem Abfragesignal erkannten Bauart der Schalteinrichtung vorgesehen sind, und
- bei Feststellung einer Überschreitung des Zeitgrenzwertes in dem Schaltglied die Daten zu der Schalteinrichtung in Rahmen, deren Länge der gespeicherten Bauart der Schalteinrichtung entspricht, übertragen werden.

2. Schaltungsanordnung nach Anspruch 1,
**dadurch gekennzeichnet**, daß
- das Schaltglied einen Speicher (E, E1, E2) aufweist, in dem einerseits Daten einer ersten Art, z.B. Vermittlungsbetriebs-Daten, und andererseits Daten einer zweiten Art, z.B. die Schaltglieder sowie gegebenenfalls an sie angeschlossene weitere Schaltungseinheiten wie Teilnehmeranschlüsse, Spannungsgeneratoren und dergleichen betreffende Betriebszustands-Daten, gesammelt und zwischengespeichert werden, und
- die Schalteinrichtung Mittel zum Abfrages des Schaltgliedes einerseits in relativ kurzen Zeitabständen in regelmäßiger Folge auf ein Vorliegen von Daten der ersten Art und andererseits in regelmäßigen, relativ längeren Zeitabständen auf ein Vorliegen von Daten der zweiten Art enthält, und
- das Schaltglied Mittel zum Überwachen des Zeitabstandes zwischen zwei aufeinanderfolgenden Abfragen von Daten der ersten Art auf eine Überschreitung des Zeitgrenzwertes enthält, und
- bei Feststellung einer Überschreitung des Zeitgrenzwertes die in dem Speicher des Schaltgliedes gesammelten und zwischengespeicherten Daten der zweiten Art kontinuierlich und zerstörungsfrei aus seinem Speicher ausgelesen und kontinuierlich wiederholt zu der Schalteinrichtung übertragen werden.

3. Schaltungsanordnung nach Anspruch 1,
**dadurch gekennzeichnet**, daß
das Schaltglied zwei parallel und unabhängig voneinander in einem gemeinsamen Arbeitsbereich Datenabruf-, Datensammel- und Datenzwischenspeicherungsvorgänge abwickelnde Datenabrufsammelspeicher (E, E1; E2) aufweist.

4. Schaltungsanordnung nach Anspruch 3,
**dadurch gekennzeichnet**,
daß der erste der beiden Datenabrufsammelspeicher (E, E1) zum Sammeln und Zwischenspeichern von Daten der ersten Art und von Daten der zweiten Art vorgesehen ist, und daß der zweite Datenabrufsammelspeicher (E2) zum Sammeln und Zwischenspeichern von Daten nur der ersten Art eingerichtet ist.

5. Schaltungsanordnung nach Anspruch 4,
**dadurch gekennzeichnet,**
daß in dem ersten Datenabrufsammelspeicher eine Leseeinrichtung (L) zur kontinuierlichen und zerstörungsfreien Übertragung der zwischengespeicherten Daten der zweiten Art über einen Weg (a) zu einer Abfragestelle (A) in dem zweiten Datenabrufsammelspeicher angeordnet ist, wo sie für die Schalteinrichtung ohne Zwischenspeicherung kontinuierlich empfangbar sind.

6. Schaltungsanordnung nach Anspruch 5,
**dadurch gekennzeichnet,** daß im Fall einer durch die Schalteinrichtung festgestellten Störung bei einer Abfrage über die Datenleitung (P1, z14) des ersten Datenabrufsammelspeichers , insbesondere im Fall einer Störung der zugehörigen Datenleitung, der zweite Datenabrufsammelspeicher von der Schalteinrichtung über die zugehörige Datenleitung (P2, z35) angesteuert wird und die dort kontinuierlich empfangsbereit zur Verfügung stehenden Daten der zweiten Art über die Abfragestelle zu der Schalteinrichtung übertragen werden.

7. Schaltungsanordnung nach Anspruch 6,
**dadurch gekennzeichnet**,
eine zentrale Schalteinrichtung, deren Abfragevorgänge über teilzentrale Schalteinrichtungen, insbesondere Anschlußgruppen (LTG 14, LTG 35) und ihnen zugeordnete Gruppenprozessoren (GP 14, GP 35) abgewickelt werden, wobei die in dem Schaltglied vorgesehenen beiden Datenabrufsammelspeicher über zwei verschiedene teilzentrale Schalteinrichtungen von der zentralen Schalteinrichtung zur Abfrage ansteuerbar sind.

## Claims

1. Circuit arrangement for telecommunications systems, especially telephone switching systems, in which
- a central switching device (CP), for example a processor, is connected via a data line (Z, z14, P1 and, respectively, Z, z35, P2) to an intermediate-level switching element (K), for example a concentrator, and
- the switching element exhibits a memory which is interrogated for the presence of temporarily stored data at regular sequence by the switching device, and
- in the switching element means are provided for monitoring the time interval between two successive interrogations for a transgression of a fixed time limit value,
characterized in that
- the switching device is set up for accepting data in frames of in each case different length as determined by its type of construction, particularly an older and newer type of construction, and
- the switching element is set up for a collaboration with central switching devices of two types of construction, particularly an older and a newer type of construction, and
- the switching element contains means for detecting the type of construction of the switching device as determined by a type-of-construction-specific interrogation signal, and
- means are provided for transmitting the data from the switching element to the switching device in frames of corresponding length as determined by the type of construction detected,
- the data temporarily stored in the memory are read out continuously and nondestructively when a transgression of the time limit value is found and are transmitted repeatedly continuously to the switching device, and
- in the switching element, means are provided for storing the type of construction of the switching device detected from the interrogation signal, and
- when a transgression of the time limit value is found in the switching element, the data are transmitted to the switching device in frames, the length of which corresponds to the stored type of construction of the switching device.

2. Switching arrangement according to Claim 1, characterized in that
- the switching element exhibits a memory (E, E1, E2) in which, on the one hand, data of a first type, for example switching service data and, on the other hand, data of a second type, for example operating state data relating to the switching elements and possibly further circuit units connected thereto, such as subscriber lines, voltage generators and the like, are accumulated and temporarily stored, and
- the switching device contains means for interrogating the switching element, on the one hand, for the presence of data of the first type at regular sequence at relatively short time intervals and, on the other hand, for the presence of data of the second type at regular, relatively longer time intervals, and
- the switching element contains means for monitoring the time interval between two successive interrogations of data of the first type for a transgression of the time limit value, and
- when a transgression of the time limit value is found, the data of the second type, which are accumulated and temporarily stored in the memory of the switching element, are continuously and nondestructively read out of its memory and are continuously repeatedly transmitted to the switching device.

3. Circuit arrangement according to Claim 1, characterized in that the switching element exhibits two data retrieval accumulators (E, E1; E2) which handle data retrieval, data accumulation and temporary data storage processes in parallel and independently of one another in a common work area.

4. Circuit arrangement according to Claim 3, characterized in that the first one of the two data retrieval accumulators (E, E1) is provided for accumulating and temporarily storing data of the first type and data of the second type, and in that the second data retrieval accumulator (E2) is set up for accumulating and temporarily storing data of only the first type.

5. Circuit arrangement according to Claim 4, characterized in that in the first data retrieval accumulator, a reading device (L) is arranged for the continuous and nondestructive transmission of the temporarily stored data of the second type, via a path (a) to an interrogation station (A) in the second data retrieval accumulator, where they can be continuously received for the switching device without temporary storage.

6. Circuit arrangement according to Claim 5, characterized in that, in the case of a disturbance during an interrogation via the data line (P1, z14) of the first data retrieval accumulator, particularly in the case of a disturbance of the associated data line, detected by the switching device, the second data retrieval accumulator is addressed by the switching device via the associated data line (P2, z35) and the data of the second type, which are continuously available there ready for reception, are transmitted to the switching device via the interrogation station.

7. Circuit arrangement according to Claim 6, characterized by a central switching device, the interrogation processes of which are handled via intermediate-level switching devices, particularly line trunk groups (LTG 14, LTG 35) and associated group processors (GP 14, GP 35), the two data retrieval accumulators provided in the switching element being addressable for interrogation by the central switching device via two different intermediate-level switching devices.

## Revendications

1. Montage pour installations de télécommunication, notamment installations de commutation téléphonique, dans lesquelles
- un dispositif central de commutation (CPU), par exemple un processeur, est relié, par l'intermédiaire d'une ligne de transmission de données (Z, z14, P1 ou Z, z35, P2), à un circuit partiellement central de commutation (K), par exemple un concentrateur, et
- le circuit de commutation comporte une mémoire, qui est interrogée selon une séquence régulière par le dispositif de commutation pour déterminer la présence éventuelle de données mémorisées temporairement, et
- dans le circuit de commutation, des moyens sont prévus pour contrôler l'intervalle de temps entre deux interrogations successives pour déterminer si cet intervalle de temps dépasse une valeur limite de temps fixée,
caractérisé par le fait que
- le dispositif de commutation est agencé, en fonction de son type, notamment d'un type plus ancien et d'un type plus récent, pour recevoir des données dans le cadre d'une longueur respectivement différente, et
- le circuit de commutation est agencé pour un travail en coopération avec les dispositifs centraux de commutation de deux types, notamment d'un type plus ancien et d'un type plus récent, et
- le circuit de commutation comporte des moyens pour identifier le type du dispositif de commutation, en fonction d'un signal d'interrogation spécifique au type, et
- des moyens sont prévus pour la transmission des données du circuit de commutation au dispositif de commutation, en fonction du type identifié dans le cadre d'une longueur correspondante,
- des données mémorisées temporairement dans la mémoire sont lues continûment et sans destruction lors de la détermination d'un dépassement de la valeur limite de temps et sont transmises d'une manière répétée continûment en direction du dispositif de commutation, et
- dans le circuit de commutation, des moyens sont prévus pour mémoriser le type du dispositif de commutation, identifié à partir du signal d'interrogation, et
- lors de la détermination d'un dépassement de la valeur limite de temps dans le circuit de commutation, les données sont transmises au dispositif de commutation dans des cadres, dont la longueur correspond au type mémorisé du dispositif de commutation.

2. Montage suivant la revendication 1, caractérisé par le fait que
- le circuit de commutation comporte une mémoire (E, E1, E2), dans laquelle sont collectées et mémorisées temporairement, d'une part, des données d'un premier type, par exemple des données de service de commutation, et, d'autre part, des données d'un second type, par exemple des données d'état de service concernant les circuits de commutation ainsi que d'autres unités de circuit éventuellement raccordées au circuit de commutation, comme par exemple des postes d'abonnés, des générateurs de tension et analogues, et
- le dispositif de commutation comporte des moyens pour interroger le circuit de commutation, d'une part, pendant des intervalles de temps relativement brefs selon une séquence régulière pour déterminer une présence éventuelle de données du premier type et, d'autre part, à des intervalles de temps réguliers relativement plus longs pour déterminer la présence éventuelle de données du second type, et
- le circuit de commutation comporte des moyens pour contrôler l'intervalle de temps entre deux interrogations successives de données du premier type pour déterminer si cet intervalle de temps dépasse la valeur limite de temps, et
- lors de la détermination d'un dépassement de la valeur limite de temps, les données du second type, collectées et mémorisées temporairement dans la mémoire du circuit de commutation, sont lues de façon continue et sans destruction à partir d'une mémoire et sont transmises d'une manière répétée continûment au dispositif de commutation.

3. Montage suivant la revendication 1, caractérisé par le fait que le circuit de commutation comporte deux mémoires d'appel et de collecte de données (E, E1; E2), qui exécutent en parallèle et indépendamment l'une de l'autre des processus d'appel de données, de collecte de données et de mémorisation temporaire de données, dans une zone de travail commune.

4. Montage suivant la revendication 3, caractérisé par la première des deux mémoires d'appel et de collecte de données (E, E1) est prévue pour collecter et mémoriser temporairement des données du premier type et des données du second type, et que la seconde mémoire (E2) d'appel et de collecte de données est agencée de manière à collecter et mémoriser temporairement des données uniquement du premier type.

5. Montage suivant la revendication 4, caractérisé par le fait que dans la première mémoire d'appel et de collecte de données est prévu un dispositif de lecture (L) servant à transmettre continûment et sans destruction les données du second type mémorisées temporairement, par l'intermédiaire d'un trajet (a) jusqu'à un poste d'interrogation (A) situé dans la seconde mémoire d'appel et de collecte de données, où elles peuvent être reçues continûment pour le dispositif de commutation, sans mémorisation intermédiaire.

6. Montage suivant la revendication 5, caractérisé par le fait que dans le cas d'une perturbation, établie par le dispositif de commutation, lors d'une interrogation par l'intermédiaire de la ligne de transmission de données (P1, z14) de la première mémoire d'appel et de collecte de données, notamment dans le cas d'une perturbation de la ligne associée de transmission de données, la seconde mémoire d'appel et de collecte de données est commandée par le dispositif de commutation par l'intermédiaire de la ligne associée de transmission de données (P2, z35) et les données du second type, qui sont présentes en cet endroit en étant continûment prêtes pour la réception, sont transmises par l'intermédiaire du poste d'interrogation au dispositif de commutation.

7. Montage suivant la revendication 6, caractérisé par un dispositif central de commutation, dont les processus d'interrogation se déroulent en passant dans des dispositifs partiellement centrés de commutation, notamment des groupes de raccordement (LTG 14, LTG 35) et les processeurs de groupe (GP 14, GP 35), qui leur sont associés, les deux mémoires d'appel et de collecte de données, qui sont prévues dans le circuit de commutation, pouvant être commandées par le dispositif central de commutation pour l'interrogation, par l'intermédiaire de deux dispositifs de commutation partiellement centraux différents.
